# EUROPEAN PATENT SPECIFICATION

(11) **EP 4 145 036 B1**
(45) Date of publication and mention of the grant of the patent: **17.04.2024**
(21) Application number: 21918109.6
(22) Date of filing: 13.07.2021
(51) Int. Cl.: F16M 11/12, F16M 11/20

(54) **COMPUTER SUPPORT ARM THE ANGLE OF WHICH CAN BE FREELY ADJUSTED**
COMPUTERTRAGARM MIT FREI EINSTELLBAREM WINKEL
BRAS DE SUPPORT D'ORDINATEUR DONT L'ANGLE PEUT ÊTRE AJUSTÉ LIBREMENT

(30) Priority: 12.07.2021 CN 202110781977
(43) Date of publication of application: 08.03.2023
(73) Proprietor: SHANGHAI LINGHAI TRADING CENTER, Shanghai 201718 (CN)
(72) Inventor: TANG, Yongfei, Shanghai 202150 (CN)
(74) Representative: Bandpay & Greuter
(86) International application number: PCT/CN2021/105880
(87) International publication number: WO 2023/283796

(56) References cited:
- EP-A2- 3 805 576
- WO-A2-2006/132938
- CN-A- 104 565 746
- CN-A- 109 611 672
- CN-U- 213 236 877
- US-A1- 2008 029 670
- US-A1- 2015 342 351
- US-A1- 2019 301 670
- US-A1- 2020 393 077

## Description

### TECHNICAL FIELD

The invention relates to the technical field of computer support, in particular to a computer arm with freely adjustable Angle. An example of such an arm is shown in US2019/301670A1.

### BACKGROUND

With the invention of the computer, people's way of life has been changed. Now office buildings basically use computers for office work, but the monitors of existing computers basically use a bracket to fix the monitor, and the monitor cannot swing, rotate, etc. A series of flexible If the display is fixed in the spatial position, the range of adjustment that can be adjusted is too small, and everyone's height and sitting posture are different, which cannot be adapted to the experience of most people.

### SUMMARY

In order to overcome the deficiencies of the prior art, the present invention provides a computer support arm whose angle can be adjusted freely, the computer support arm can be adjusted in multiple angles and ranges, and solves the problem that the adjustment range of the existing computer monitor in the space position is small and difficult to adjust. Satisfy the experience of most people.

In order to achieve the above purpose, a computer support arm with a freely adjustable angle is designed, including a VESA board assembly, a ball head assembly, and a base assembly, characterized in that: one end of the ball head assembly is connected to the VESA board assembly, and the other end of the ball head assembly passes through the The upper joint is connected to one end of the dynamic arm, the other end of the dynamic arm is connected to one end of the inclined arm through the first lower j oint, and the other end of the inclined arm is connected to the base assembly through the second lower joint.

The VESA board assembly includes a VESA board and an insert block, the front part of the VESA board is connected with a waist-shaped boss, the VESA board is connected to the insert block through the waist-shaped boss, and the insert block adopts a plurality of first screws and the waist-shaped boss. connect.

The back of the insert block is provided with a square boss, a waist-shaped groove matching with the waist-shaped boss is located on the square boss, and a plurality of through holes are arranged on the waist-shaped groove.

The ball head assembly includes a fixing seat, a connecting piece, a figure-eight joint, and a knob assembly. The middle of the fixing base is connected with the bottom of the connecting piece by a second screw and a nut, and the upper part of the connecting piece is connected with the figure-eight joint by a third screw and an end cover. A knob assembly is provided on the fixing seat under the connecting piece.

The connecting piece has a U-shaped structure, and a first friction plate and a second friction plate are arranged between the bottom of the connecting piece and the fixing seat; a number of elastic gaskets are arranged between the nut and the connecting piece; the first friction plate The sheet is a circular sheet-like structure, and is located in the middle of the first friction sheet with a waist-shaped hole, and the two ends of the first friction sheet are respectively provided with a first bending structure; the second friction sheet is in the shape of a circular sheet A circular hole is arranged in the middle of the second friction sheet, the outer edge of the circular hole is provided with a number of weight-reducing holes, and both ends of the second friction sheet are respectively provided with a second bending structure.

The upper inner part of the connecting piece is provided with a third friction piece, the left end face of the upper outer part of the connecting piece is provided with a left end cover, the right end face of the upper outer part of the connecting piece is provided with a right end cover, the third screw from left to right through the elastic gasket, the left end cover, the connecting piece, the eight-figure joint is connected with the right end cover.

The left and right ends of the eight joint and the connecting piece are respectively connected with a friction boss.

The first part described the knob component including compression spring, the first bolt, the gland, the knob, the knob, the fitting at the bottom of the fixing seat is equipped with the waist notch, waist notch inline with the gland, the first central gland has a round hole, round hole with the knob, described the first knob at the top of the connection first knob by square convex sets, One side of the bottom of the first knob is provided with a first knob boss, the bottom of the first knob boss is connected with the top arc surface of the first bolt, and the lower part of the first bolt is provided with a small compression spring.

The back side of the fixing seat of the ball head assembly is provided with a groove matching the insertion block structure of the VESA board assembly.

The dynamic arm comprises an upper connecting rod and a lower connecting rod, and the upper connecting rod is provided with an upper connecting rod, one end of the upper connecting rod and the lower connecting rod is connected with the upper joint, and the other end of the upper connecting rod and the lower connecting rod is connected with the first joint; The upper connecting rod is provided with a driving spring, the front and rear ends of the driving spring are respectively connected with one end of the first spring joint and the second spring joint, the other end of the first spring joint is connected with the pin connecting the adapter piece, the top of the adapter piece is connected with the retaining pin, and the two ends of the retaining pin is connected with the retaining piece, the bottom of the adapter piece is connected with the pin connecting rod; The other end of the second spring joint is connected with one end of the indicating ring, and the other end of the indicating ring is connected with the adjusting screw, and the adjusting screw is connected with the upper connecting rod through the block.

The transfer piece is composed of two L-shaped connecting pieces, and the upper part, the middle part and the lower part of the connecting piece are respectively provided with through holes for pin connection.

The baffle is u-shaped structure, the bottom of the baffle is connected with a bolt and the upper connecting rod, the front end of the baffle is provided with an L-shaped baffle card groove, and the baffle is connected with the baffle pin connected with the top of the adapter piece through the baffle card groove.

One end of the upper joint is connected with the eight-figure joint of the ball head assembly through a connecting piece, and the upper end of the upper joint is connected with one end of the upper connecting rod by a fixed pin, and the lower end of the lower end of the upper joint is connected with one end of the lower connecting rod by a fixed pin.

The structure of the dynamic arm is consistent with that of the inclined arm.

The left and right sides of the upper connecting rod of the dynamic arm are respectively arranged with Windows.

Described in the first joint connection, including joint Angle adjustment pins, joint described the connection to the cylinder structure, connection and joint body to the top of slope, the slope has a hole, joint connecting a side upper with fixed pin and on the other end of the connecting rod to connect, under the joint connecting central side USES fixed pin and the other end of the connecting rod to connect, The bottom of the joint connecting body is connected with the Angle adjustment pin, and the upper part of the Angle adjustment pin is a cylindrical structure, and the lower part of the Angle adjustment pin is respectively provided with a 360° ring groove and a 180° half ring groove from top to bottom.

The structure of the first lower joint is consistent with that of the second lower joint.

Described in the base of the component includes base, floor MATS, L stents, small, round plate, screw, the base connection with 4 screws at the bottom of the level of the l-shaped bracket, L stents vertical plane using bolt connection of small, small stents in L as stated in the structure, small stents vertical plane and the l-shaped bracket connection, small bracket horizontal plane connection with screw, The top of the screw is connected with a circular pressure plate, and the screw runs through the small bracket and is located in the lower part of the small bracket; The circular pressure plate is located below the horizontal surface of the L-shaped support.

A foot pad is arranged between the bottom of the base and the horizontal plane of the L-shaped bracket.

Base to the top of the cylindrical structure, referred to in the top of the base is equipped with powder, embedded in the base of the upper side has a waist notch, waist notch embedded with the gland, the second central gland of a round hole, round hole with a second knob, described in the second button at the top of the connecting the second knob by square convex sets, the second side convex platform is equipped with the knob on the bottom of the knob, The bottom of the second knob is connected with the top arc surface of the second bolt through the second knob boss, and the second small compression spring is arranged at the lower part of the second bolt.

The second bolt and the second small compression spring are provided with two.

The superstructure of the base assembly is consistent with the top structure of the inclined arm.

The top of the inclined arm is connected with the Angle adjustment pin of the first joint; The top of the base assembly (6) is connected to the Angle adjustment pin of the second lower connector.

Compared with the prior art, the invention provides a computer arm with freely adjustable Angle, which can be adjusted in multiple angles and ranges, and solves the problem that the adjustment range of the space position of the existing computer monitor is small and difficult to meet the use experience of most people.

### BRIEF DESCRIPTION OF DRAWINGS

FIG. 1 is a schematic diagram of the invention.
FIG. 2 is a partial top view of the structure of the invention.
FIG. 3 is a partial side view of the structure of the invention.
FIG. 4 is a schematic diagram of the structure of the invention located at the highest point.
FIG. 5 is a schematic diagram of the structure of the invention located at the lowest point.
FIG. 6 is a schematic diagram of VESA board component structure.
FIG. 7 is a schematic diagram of VESA board assembly structural explosion.
FIG. 8 is the schematic diagram of the back of the insert block.
FIG. 9 is a schematic diagram of the ball head assembly.
FIG. 10 to 12 are schematic diagram of structural explosion of ball head assembly.
FIG. 13 is the schematic diagram of the first friction plate.
FIG. 14 is the schematic diagram of the second friction plate.
FIG. 15 is the schematic diagram of the eight-point joint.
FIG. 16 is a schematic diagram of the bottom structure of the connector.
FIG. 17 shows the connection diagram of the dynamic arm with the upper joint and the lower joint.
FIG. 18 shows the connection diagram of the inclined arm and the second lower joint.
FIG. 19 is the sectional view of the dynamic arm structure.
FIG. 20 is a schematic diagram of dynamic arm structure explosion.
FIG. 21 is a schematic diagram of the adapter plate.
FIG. 22 is a schematic diagram of the baffle structure.
FIG. 23 is the window structure diagram.
FIG. 24 is a schematic diagram of the inner side of the upper connecting rod.
FIG. 25 shows the driving spring connection explosion diagram.
FIG. 26 is the schematic diagram of the first lower joint and the second joint.
FIG. 27 is the structure diagram of Angle adjustment pin.
FIG. 28 is a schematic diagram of the base assembly.
FIG. 29 is a schematic diagram of the explosion of the base assembly structure.
FIG. 30 shows a schematic diagram of the structural explosion at the upper part of the base assembly.
FIG. 31 is a schematic diagram of structural explosion at the upper part of the inclined arm.
FIG. 32 and 33 are schematic diagrams of knob structure.
FIG. 34 is a schematic diagram of bolt structure.

### DESCRIPTION OF EMBODIMENTS

The invention is further explained in accordance with the attached drawings.

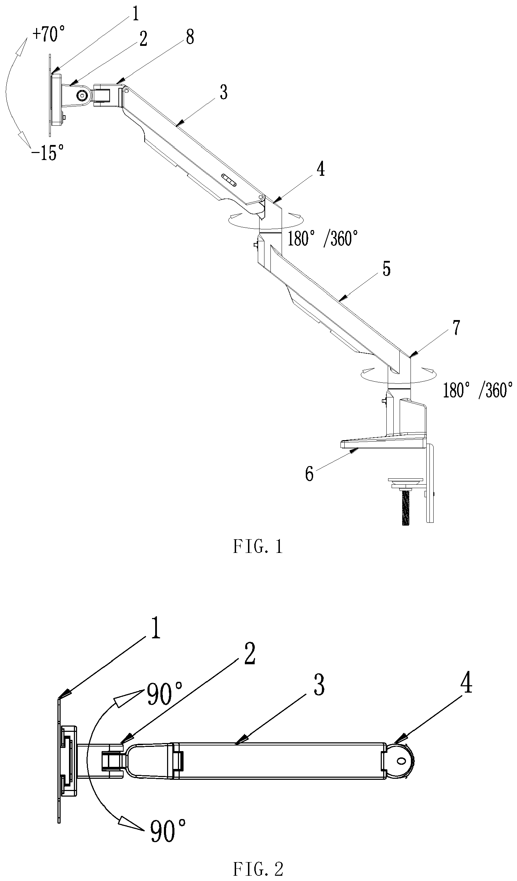

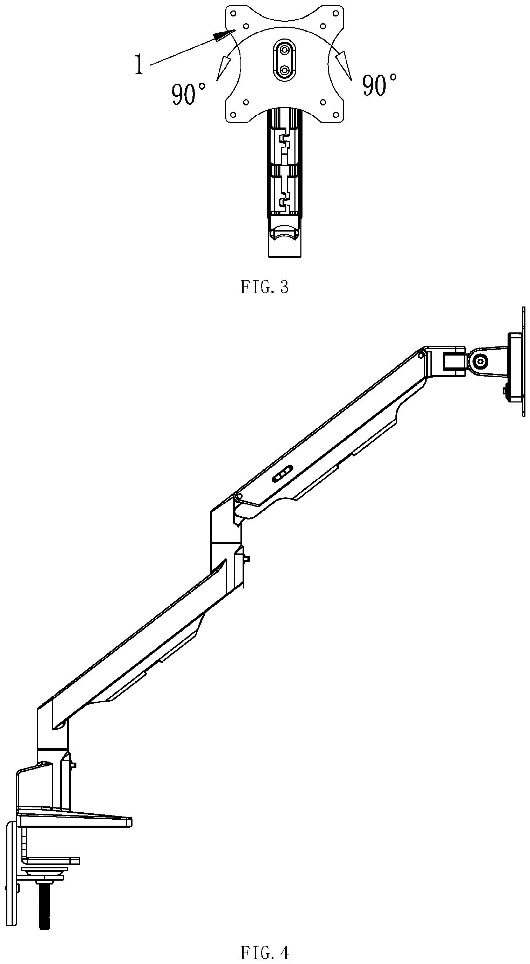

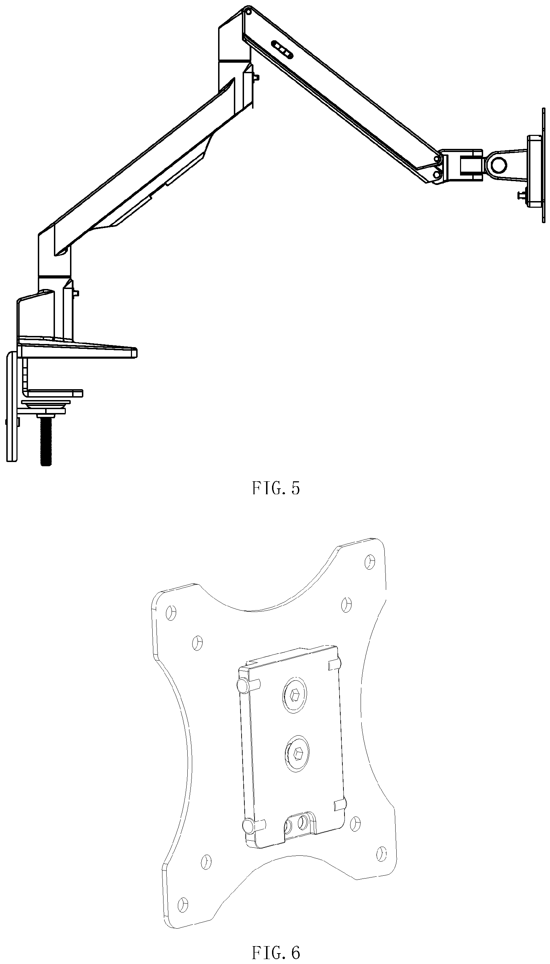

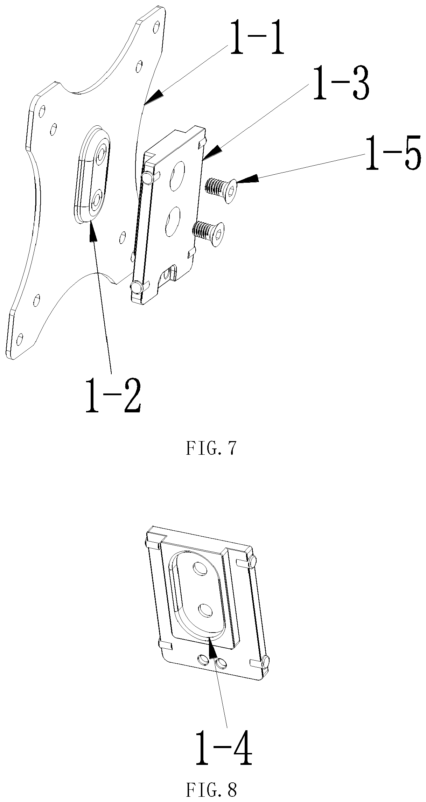

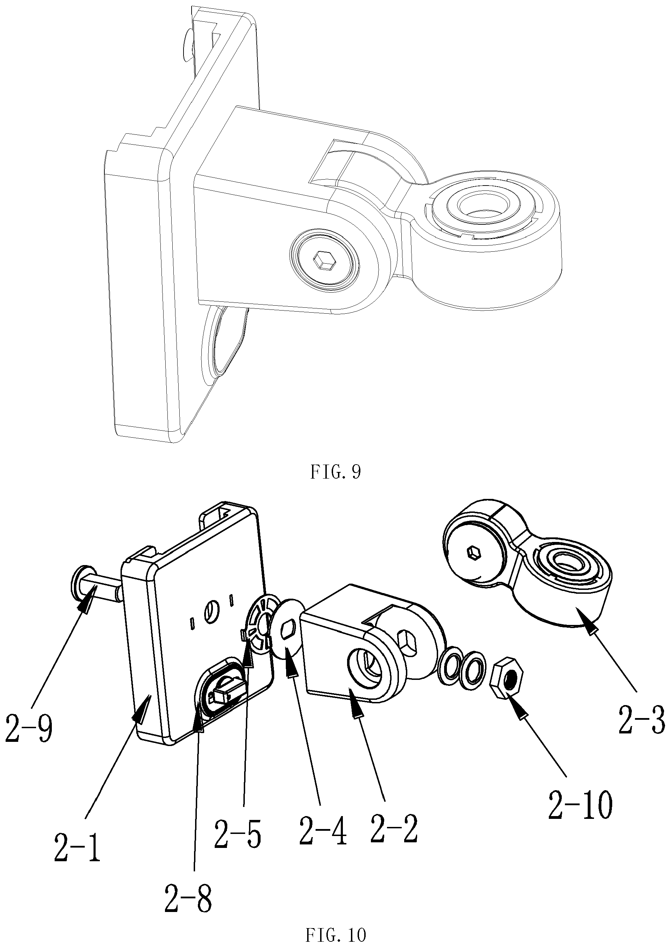

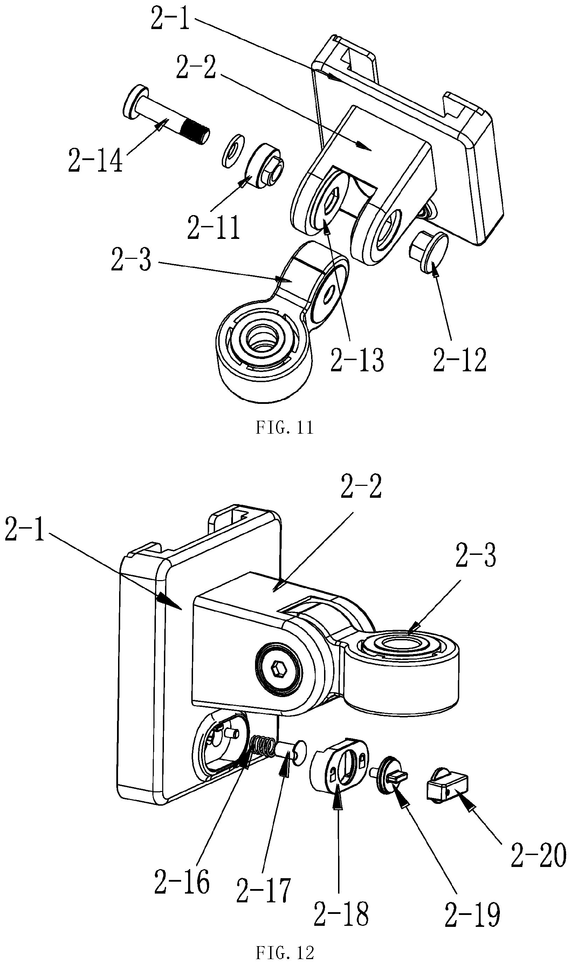

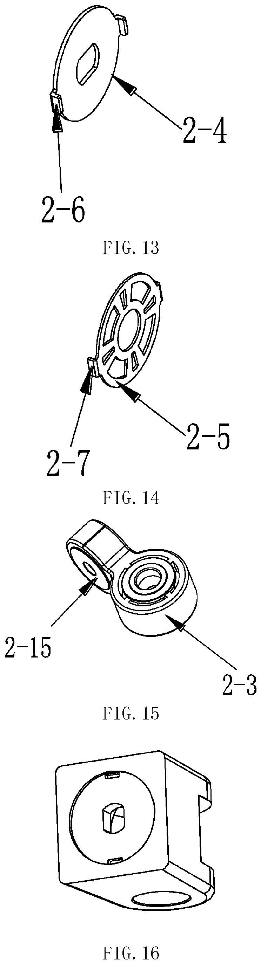

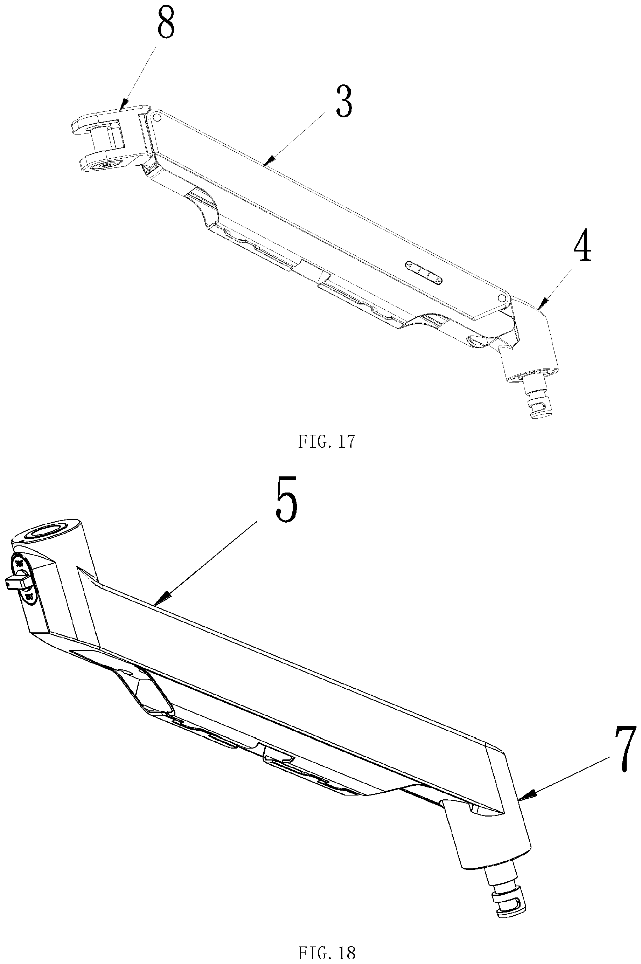

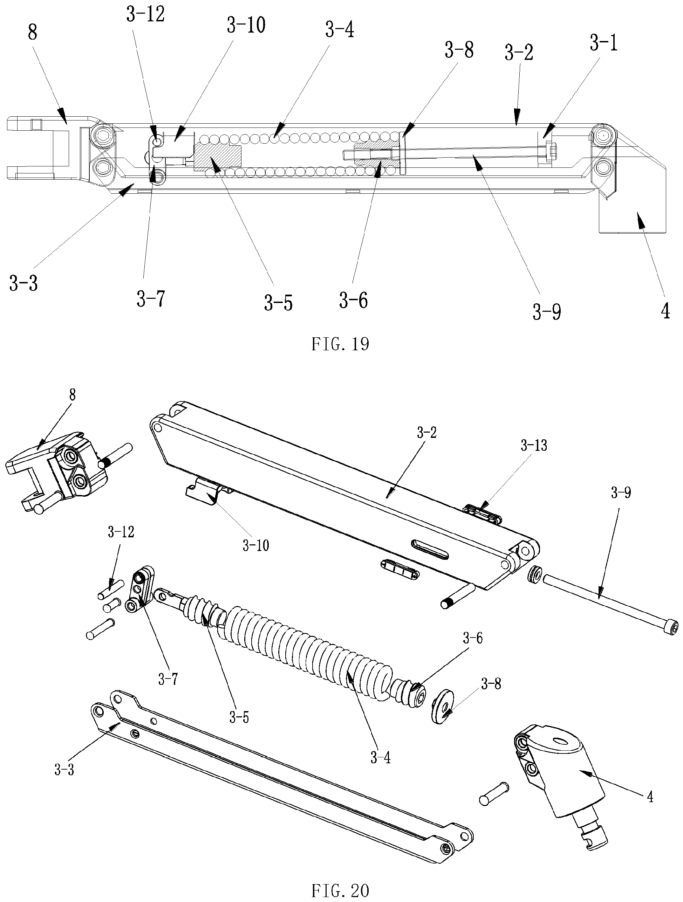

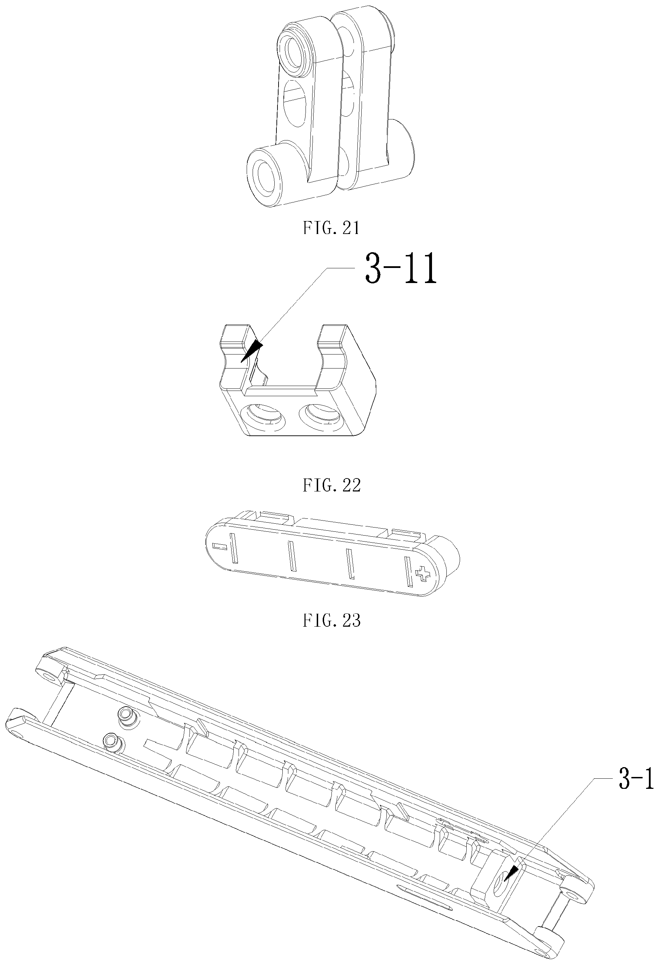

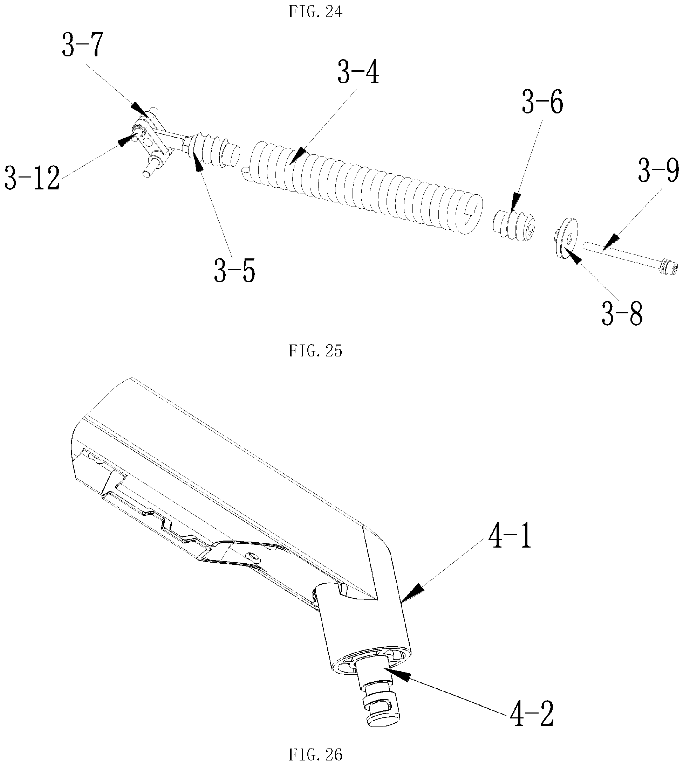

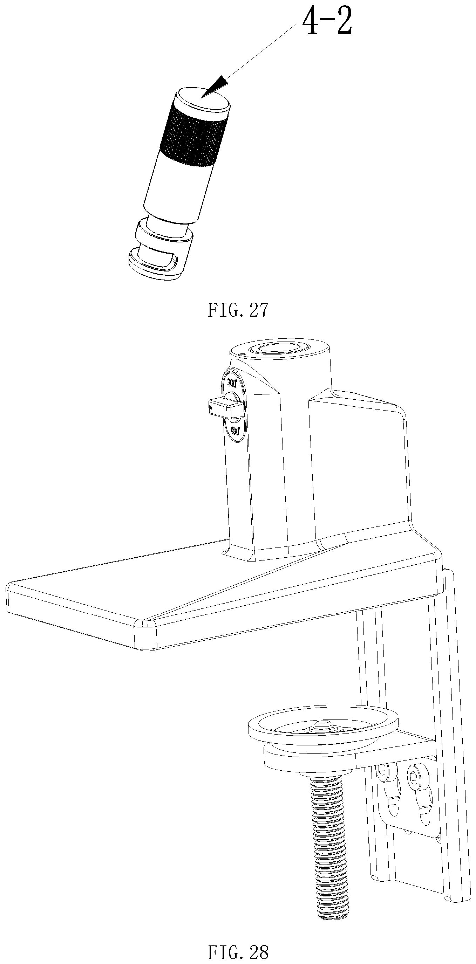

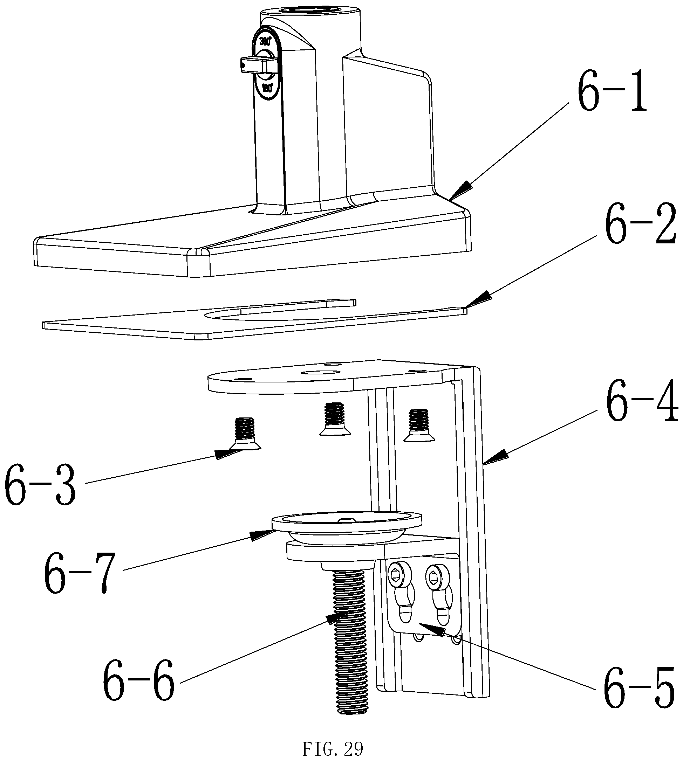

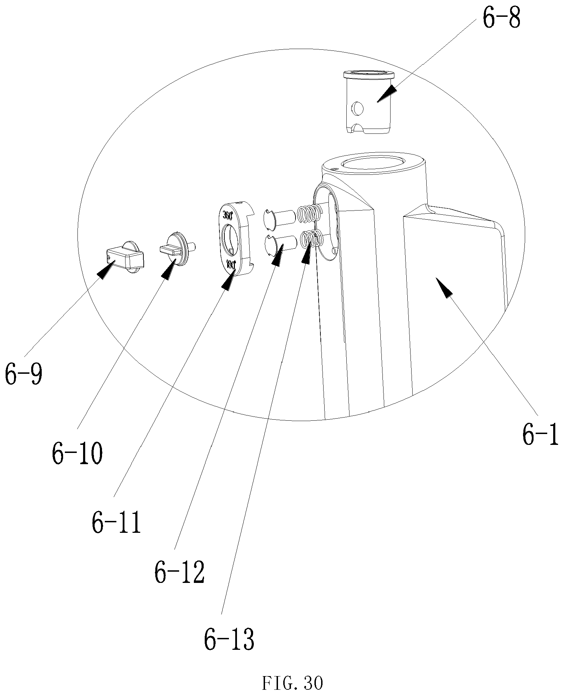

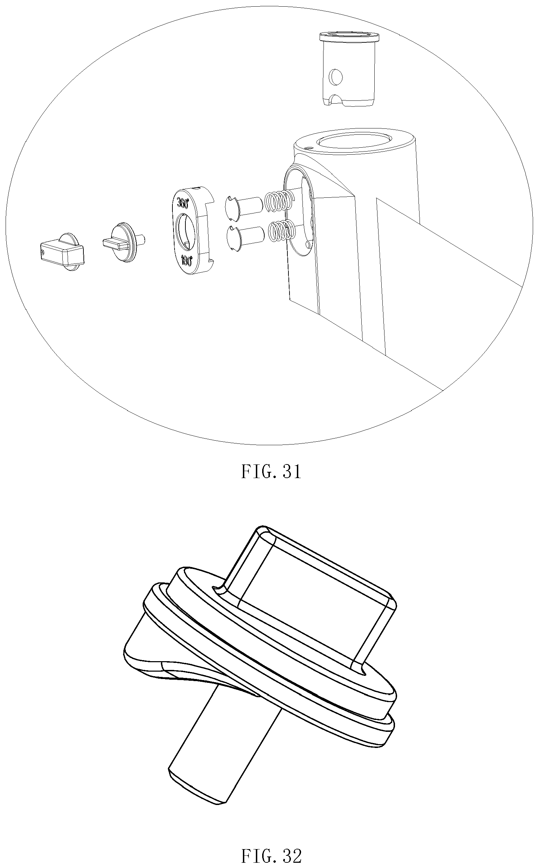

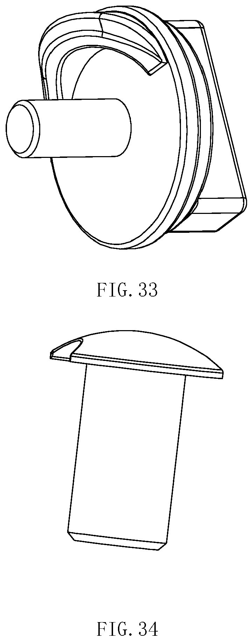

As shown in FIG. 1 to FIG. 34, one end of the ball assembly 2 is connected to VESA board assembly 1, the other end of the ball assembly 2 is connected to one end of the dynamic arm 3 through the upper connector 8, the other end of the dynamic arm 3 is connected to one end of the inclined arm 5 through the first lower connector 4, and the other end of the inclined arm 5 is connected to the base assembly 6 through the second lower connector 7.

VESA board assembly 1 comprises VESA board and insert block. The front part of VESA board 1-1 is connected with waist boss 1-2. VESA board 1-1 is connected with insert block 1-3 through waist boss 1-2, and insert block 1-3 is connected with waist boss 1-2 by several first screws 1-5.

A square boss is arranged on the back of the insert block 1-3, and a waist groove 1-4 is arranged on the square boss, which is matched with the waist groove 1-2, and a plurality of through holes are arranged on the waist groove 1-4.

Ball head assembly 2 includes a fixing seat, a connector, a figure-eight joint and a knob assembly. In the middle of the fixing seat 2-1, the second screw 2-9 and nut 2-10 are used to connect the bottom of the connector 2-2. In the upper part of the connector 2-2, the third screw 2-14 and the end cover are used to connect the figure-eight joint 2-3. Knob assembly 2-8 is arranged on the fixing seat 2-1 below the connector 2-2.

The connecting piece 2-2 is u-shaped structure, and the first friction piece 2-4 and the second friction piece 2-5 are arranged between the bottom of the connecting piece 2-2 and the fixing seat 2-1. A plurality of elastic gaskets are arranged between nut 2-10 and connecting piece 2-2; The first friction plate 2-4 is a circular sheet structure, and is located in the middle of the first friction plate 2-4 is provided with a waist shaped hole, the first friction plate 2-4 both ends are respectively provided with a first bending structure 2-6; The second friction plate 2-5 is a circular sheet structure, and is located in the middle of the second friction plate 2-5 is provided with a round hole, the outer edge of the round hole is provided with a plurality of weight reduction holes, the two ends of the second friction plate 2-5 are respectively provided with a second bending structure 2-7.

The upper inner side of the connector 2-2 is provided with a third friction piece 2-13, the left end face of the upper outer side of the connector 2-2 is provided with a left end cover 2-11, and the right end face of the upper outer side of the connector 2-2 is provided with a right end cover 2-12, The third screw 2-14 is connected with the right end cover 2-12 through the elastic gasket, the left end cover 2-11, the connector 2-2, the eight-shaped joint 2-3 and the right end cover 2-12 respectively from left to right.

The left and right ends of the eight connector 2-3 and the connector 2-2 are respectively connected with the friction boss 2-15.

Knob assembly 2-8 comprises the first small compression spring, the first latch, the first gland, the first knob, the first knob sleeve, is arranged on the fixing seat 2-1 below the connector 2-2 waist groove, waist groove is embedded with the first gland 2-18, the middle of the first gland 2-18 is provided with a round hole, round hole is provided with the first knob 2-19, The top of the first knob 2-19 is connected with the first knob sleeve 2-20 through the square boss, the bottom side of the first knob 2-19 is provided with the first knob boss 2-21, the bottom of the first knob 2-19 is connected with the top arc surface of the first latch 2-17 through the first knob boss 2-21, The first small compression spring 2-16 is arranged at the lower part of the first bolt 2-17.

The back of the fixing seat 2-1 of the ball head assembly 2 is provided with a groove in connection with the insert 1-3 structure of VESA board assembly 1.

Dynamic arm 3 comprises an upper connecting rod and a lower connecting rod. The upper sleeve of the lower connecting rod 3-3 is provided with an upper connecting rod 3-2, one end of the upper connecting rod 3-2 and the lower connecting rod 3-3 is connected with the upper joint 8, and the other end of the upper connecting rod 3-2 and the lower connecting rod 3-3 is connected with the first lower joint 4; The upper connecting rod 3-2 is provided with a driving spring 3-4, the front and rear ends of the driving spring 3-4 are respectively connected with one end of the first spring joint 3-5 and the second spring joint 3-6, the other end of the first spring joint 3-5 is connected with a pin connecting the adapter piece 3-7, the top of the adapter piece 3-7 is connected with the retaining pin 3-12, and the ends of the retaining pin 3-12 are connected with the retaining piece 3-10, The bottom of the adapter piece 3-7 is connected with the lower connecting rod 3-3 by a pin; The other end of the second spring joint 3-6 is connected with one end of the indicating ring 3-8, and the other end of the indicating ring 3-8 is connected with the adjusting screw 3-9, and the adjusting screw 3-9 is connected with the upper connecting rod 3-2 through the stopper 3-1.

The connecting piece 3-7 is composed of two L-shaped connecting pieces, and the upper, middle and lower positions of the connecting piece are respectively arranged in the through hole of pin connection.

The baffle 3-10 is u-shaped structure, the bottom of the baffle 3-10 is connected with the upper connecting rod 3-2 by bolts, the front end of the baffle 3-10 is provided with l-shaped baffle card slot 3-11, and the baffle 3-10 is connected with the baffle pin 3-12 connected with the top of the adapter piece 3-7 through the baffle card slot 3-11.

One end of the upper connector 8 is connected with the eight-shaped connector 2-3 of the ball head assembly 2 through a connecting piece, and the upper end of the other end of the upper connector 8 is connected with one end of the upper connecting rod 3-2 by a fixing pin, and the lower end of the other end of the upper connector 8 is connected with one end of the lower connecting rod 3-3 by a fixing pin.

The structure of dynamic arm 3 is the same as that of inclined arm 5.

The left and right sides of the upper connecting rod 3-2 of dynamic arm 3 are respectively embedded with Windows 3-13.

The first joint 4 comprises a joint connector and an Angle adjustment pin. The joint connector 4-1 is a cylinder structure, and the top of the joint connector 4-1 is a bevel, and the bevel is provided with a through hole. The upper part of the joint connector 4-1 is connected with the other end of the upper connecting rod 3-2 by a fixed pin. The middle part of the joint connecting body 4-1 is connected with the other end of the lower connecting rod 3-3. The bottom part of the joint connecting body 4-1 is connected with the Angle adjustment pin 4-2. The upper part of the Angle adjustment pin 4-2 is a cylindrical structure, and the lower part of the Angle adjustment pin 4-2 is respectively provided with a 360° ring groove and a 180° half ring groove from top to bottom.

The first lower joint 4 has the same structure as the second lower joint 7.

Base assembly 6 includes base, foot pad, L-shaped bracket, small bracket, round pressure plate and screw. The bottom of base 6-1 uses the fourth screw 6-3 to connect the horizontal plane of L-shaped bracket 6-4, and the vertical plane of L-shaped bracket 6-4 uses bolts to connect the small bracket 6-5. The small bracket 6-5 is an L-shaped structure. The vertical plane of the small bracket 6-5 is connected with the L-shaped bracket 6-4, the horizontal plane of the small bracket 6-5 is connected with a screw 6-6, the top of the screw 6-6 is connected with a circular pressure plate 6-7, and the screw 6-6 runs through the small bracket 6-5 and is located at the lower part of the small bracket 6-5; The circular pressure plate 6-7 is located below the horizontal plane 6-4 of the L-shaped bracket.

Footpad 6-2 is provided between the bottom of base 6-1 and the horizontal plane of L-shaped bracket 6-4.

The upper part of the base 6-1 is cylindrical structure, the top of the base 6-1 is provided with a powder set 6-8, is arranged on the upper side of the base 6-1 is provided with a waist groove, waist groove is provided with a second gland 6-11, the middle of the second gland 6-11 is provided with a round hole, round hole is provided with a second knob 6-10, The top of the second knob 6-10 is connected with the second knob sleeve 6-9 through the square boss, the bottom side of the second knob 6-10 is provided with a second knob boss 6-14, the bottom of the second knob 6-10 is connected with the top arc surface of the second latch 6-12 through the second knob boss 6-14, A second small compression spring 6-13 is arranged in the lower sleeve of the second latch 6-12.

The second latch 6-12 and the second small compression spring 6-13 are provided with two.

The superstructure of the base assembly 6 is identical to the top structure of the ramp arm 5.

The top of the inclined arm 5 is connected with the Angle adjustment pin 4-2 of the first lower joint 4; The top of the base assembly 6 is connected to the Angle adjustment pin of the second lower connector 7.

VESA plate 1-1 can rotate about 90°; The ball head assembly 2 can lean forward -15°, lean back +50°, and rotate about 90°; The dynamic arm 3 is driven by the driving spring 3-4. It moves and locates at any position between high and low points, and can rotate 360° and limit 180°. Oblique arm 5 can rotate 360° and limit 180°; The screw 6-6 on the base assembly 6 rotates so that the circular platen 6-7 presses against the table top.

VESA board card entry, limit and exit: Before the plug block 1-3 on VESA plate 1-1 is clamped into the fixing seat 2-1, the knob assembly 2-8 on the ball head assembly 2 is in the loosened position, and the first pin 2-17 exits. When the plug block 1-3 enters the bottom of the fixing seat 2-1, the first knob sleeve 2-20 is transferred to the locking position, and the first knob boss 2-21 presses the first pin 2-17 arc surface. The first bolt 2-17 enters the positioning hole of plug 1-3, VESA is locked and cannot exit.

Forward and backward tilt of the ball head assembly: The left end cover 2-11 and the right end cover 2-12 are respectively clamped into the flat hole on the side of the connector 2-2, two third friction plates 2-13 are attached to the inside of the connector 2-2, respectively covered on the flat circle of the left end cover 2-11 and the right end cover 2-12, and the two friction boss 2-15 of the eight-shaped joint 2-3 are clamped into the middle of the third friction plate 2-13. Lock with M6 screw and elastic gasket, make the rotation friction resistance between eight connector 2-3 and connector 2-2. The amount of friction can be adjusted by M6 screws.

Left and right rotation of VESA plate: the connection between the fixing seat 2-1 and the connector 2-2: the second bending structure 2-7 of the second friction plate 2-5 aligns with the clamping slot of the fixing seat 2-1, and the first bending structure 2-6 of the first friction plate 2-4 aligns with the clamping slot of the connecting piece 2-2.

The fixing seat 2-1 is fitted with the connecting piece 2-2, and the second screw 2-9 passes through the fixing seat 2-1 and the connecting piece 2-2, and is fixed with two elastic gaskets and nut 2-10, so that the first friction piece 2-4 and the second friction piece 2-5 are closely attached to produce friction. Adjusting the locking force of nut 2-10 can adjust the size of friction.

The insertion limit of the inclined arm and the position switch of 180° and 360° : The lower end of the inclined arm 5 is pressed into the Angle adjustment pin, and there are two grooves on the circumference of the Angle adjustment pin, respectively 360° groove and 180° groove. Press the powder sleeve into the inner hole of the base on the upper part of the inclined arm 5, and align the hole position with the through hole in the waist hole of the base. Install bolt, knob, gland and so on in the base waist hole. 180° and 360° marks are printed on the gland. When the knob sleeve is in a horizontal position, the two pins are in the exit position, and the fixing pin on the inclined arm is inserted; When the knob sleeve turns to 360° position, the boss of the knob presses the arc surface of the bolt above, the cylindrical end of the bolt enters the 360° groove of the fixed pin, and the inclined arm can rotate 360° and cannot be pulled out; When the knob sleeve turns to the 180° position, the boss of the knob presses the arc surface of the bolt below, the cylindrical end of the bolt enters the 180° groove of the fixed pin, and the inclined arm rotates ±90° within the 180° range, and the same cannot be pulled out.

The rotation locking structure of the dynamic arm 3 on the swash arm 5 is the same as that of the swash arm 5 on the base.

How the arm works: In order to adapt to different displays, the arm 3 has a load-bearing range of 6-16 lb. The upper joint 8, the first lower joint 4, the second lower joint 7, the upper connecting rod 3-2, the lower connecting rod 3-3 are connected with pins to form a four-bar motion mechanism. The inner hole of the stopper 3-10 is set into the upper connecting rod 3-2. The adapter piece 3-7 is connected with the lower connecting rod 3-3 by a pin; Adjusting screw 3-9 is screwed into the second spring joint 3-6 through the adjusting hole of upper connecting rod 3-2; The stop pin 3-12 on the adapter piece 3-7 is inserted into the stopper slot 3-11 of the stopper piece 3-10. When the hanging weight of dynamic arm 3 needs to be adjusted, press the upper connecting rod 3-2 to the horizontal position, use the inner hexagonal wrench to pass through the inner hole of the first lower joint 4, and enter the hexagonal hole of the adjusting screw 3-9. Rotate the inner hexagon wrench clockwise, driving spring 3-4 elongated, the force value increases; Counterclockwise rotation, driving spring 3-4 shorten, the force value decreases. Spring force size display: when the spring force is adjusted, the indicator ring 3-8 at the end of the second spring joint 3-6 moves back and forth, displayed in the window 3-13 of the upper connecting rod, "+ -" indicates the increase or decrease of the force value. In order to reduce the force difference between the highest position and the lowest position of the dynamic arm 3 and make the hand feel smoother, the long waist hole in the middle of the adapter plate 3-7 is specially designed. The long waist hole is connected to the first spring joint 3-5, when in the highest position, riveting pull the first spring joint 3-5 pin in the lower end of the waist hole, in the lowest position, the pin in the upper end of the waist hole, so that the driving spring 3-4 in the whole stroke, the absolute value of the spring elongation becomes smaller, thus reducing the force difference.

## Claims

1. A computer support arm with an angle that can be freely adjusted, comprising a VESA board assembly, a ball head assembly, and a base assembly, wherein: one end of the ball head assembly (2) is connected to the VESA board assembly (1), and the ball head assembly (2) is connected to one end of a dynamic arm (3) through an upper joint (8), and the other end of the dynamic arm (3) is connected to one end of an inclined arm (5) through a first lower joint (4), and the other end of the inclined arm (5) is connected to a base assembly (6) through a second lower joint (7) wherein the ball head assembly (2) comprises a fixing seat, a connector, a figure-eight joint, a knob assembly, and the middle part of the fixing seat (2-1) uses a second screw (2-9) and a nut (2-10) to connect the bottom of the connecting piece (2-2), and an upper part of the connecting piece (2-2) uses a third screw (2-14) and an end cover to connect to the figure-eight joint (2-3), and a knob assembly (2-8) is arranged on the fixing seat (2-1) below the connecting piece (2-2) **characterized in that** the knob assembly (2-8) comprises a first small compression spring, a first latch, a first pressure cover, a first knob, a first knob sleeve, the fixing seat (2-1) located under the connecting piece (2-2) is provided with a waist-shaped groove, and the waist-shaped groove is embedded with a first gland (2-18), the middle of the first gland (2-18) is provided with a circular hole, and the circular hole is provided with the first knob (2-19), and the top of the first knob (2-19) is connected to the first sleeve (2-20) through a square boss, the bottom side of the first knob (2-19) is provided with a first knob boss (2-21), and the bottom of the first knob (2-19) is in contact with the top arc surface of the first plug (2-17) through the first knob boss (2-21), and the first small compression spring (2-16) is sleeved at the lower part of the first plug (2-17), and the back of the fixed seat (2-1) of the ball head assembly (2) is provided with a groove in connection with the insert block (1-3) VESA board assembly (1).

2. The computer support arm with a freely adjustable angle according to claim 1, **characterized in that**: the VESA board assembly (1) comprises a VESA board, a insert block, and a front part of the VESA board (1-1) is connected with a waist-shaped boss (1-2), the VESA board (1-1) being connected to the insert block (1-3) through the waist-shaped boss (1-2), and the insert block (1-3) adopts several screws (1-5) is connected with the waist-shaped boss (1-2), the back of the insert block (1-3) being provided with a square boss, and a waist-shaped groove (1-4) located on the square boss matches a waist-shaped boss (1-2), and the waist-shaped groove (1-4) is provided with a plurality of through holes.

3. The computer support arm with a freely adjustable angle according to claim 1, **characterized in that**: the connecting piece (2-2) is in a U-shaped structure, and a first friction plate (2-4) and a second friction plate (2-5) are arranged between the bottom of the connecting piece (2-2) and the seat (2-1); some elastic gaskets are arranged between the nut (2-10) and the connecting piece (2-2); the first friction sheet (2-4) is a circular sheet-like structure, and is provided with a waist-shaped hole in the middle of the first friction sheet (2-4), and two ends of the first friction sheet (2-4) are respectively provided with a first bending structure (2-6); the second friction sheet (2-5) is a circular sheet-like structure, and a round hole is located in the middle of the second friction sheet (2-5), the outer edge of the round hole is provided with a number of weight-reducing holes, and two ends of the second friction sheet (2-5) are respectively provided with a second bending structure (2-7).

4. The computer support arm with a freely adjustable angle according to claim 1, **characterized in that**: the upper inner side of the connecting piece (2-2) is provided with a third friction plate (2-13), which connects a left end cover (2-11) provided on a left end face of the upper outer side of the connecting piece (2-2), a right end cover (2-12) provided on the right end face of the upper outer side of the connecting piece (2-2), and a third screw (2-14) from left to right, the elastic gasket, the left end cover (2-11), the connecting piece (2-2), the figure-eight joint (2-3) are respectively connected to the right end cover (2-12), and/or the left and right ends of the connection between the figure-eight joint (2-3) and the connecting piece (2-2) are respectively connected with friction boss (2-15).

5. A computer support arm with a freely adjustable angle according to claim 1, **characterized in that**: the dynamic arm (3) comprises an upper connecting rod, a lower connecting rod, and an upper sleeve of the lower connecting rod (3-3) is provided with an upper connecting rod (3-2), one end of the upper connecting rod (3-2) and the lower connecting rod (3-3) are connected to the upper joint (8), the other end of the upper connecting rod (3-2) and the lower connecting rod (3-3) is connected to the first lower joint (4); the upper connecting rod (3-2) is provided with a driving spring (3-4), and the front and rear ends of the driving spring (3-4) are respectively connected with, one end of a spring joint (3-5) and a second spring joint (3-6), the other end of the first spring joint (3-5) is connected to an adapter piece (3-7) by a pin, and the top of the adapter piece (3- 7) is connected to a retaining pin (3-12), and both ends of the retaining pin (3-12) are clamped to a retaining piece (3-10), and the bottom of the adapter piece (3-7) is connected to the lower connecting rod with a pin (3-3); the other end of the second spring joint (3-6) is connected to one end of an indicator ring (3-8), and the other end of the indicator ring (3-8) is connected to an adjusting screw (3-9), the adjusting screw (3-9) being connected with the upper connecting rod (3-2) through the retaining pin (3-1).

6. The computer support arm with a freely adjustable angle according to claim 5, **characterized in that**: the adapter piece (3-7) is composed of two L-shaped connecting pieces, the upper part and the middle part of the connecting piece, and the lower positions are respectively provided with through holes connected with pins, and/or a baffle (3-10) is in a U-shaped structure, and the bottom of the baffle (3-10) adopts bolts to connect with the upper connecting rod (3-2), and an upper end of the front part of the baffle (3-10) is provided with an L-shaped baffle card slot (3-11), and the baffle (3-10) passes through the baffle card slot (3-11) to connect with a baffle pin (3-12) connected to the top of the adapter piece (3-7).

7. The computer support arm with a freely adjustable angle according to claim 1 or 5, **characterized in that**: one end of the upper joint (8) is connected to the figure-eight joint (2-8) of the ball head assembly (2) through a connecting piece, an upper part of the other end of the upper joint (8) is connected with one end of the upper connecting rod (3-2) by a fixing pin, and a lower part of the other end of the upper joint (8) is connected with the lower connecting rod (3-3) by a fixing pin one.

8. The computer support arm with a freely adjustable angle according to claim 1 or 5, **characterized in that**: the dynamic arm (3) and the inclined arm (5) have the same structure.

9. The computer support arm with a freely adjustable angle according to claim 5 **characterized in that** the left and right sides of the upper connecting rod (3-2) of the dynamic arm (3) are respectively embedded with windows (3-13).

10. The computer support arm with a freely adjustable angle according to claim 1, **characterized in that**: the first lower joint (4) comprises a joint connecting body and an angle adjustment pin, and the joint connecting body (4- 1) is a cylindrical structure, and the top of the joint connecting body (4-1) is an inclined surface with through holes on the inclined surface, the upper part of one side of the joint connecting body (4-1) adopts a fixing pin and an upper connecting rod (3-2 ), the middle of one side of the joint connecting body (4-1) is connected with the other end of the lower connecting rod (3-3) by a fixing pin, and the bottom of the joint connecting body (4-1) is connected with the angle adjusting pin (4 -2), the upper part of the angle adjustment pin (4-2) has a cylindrical structure, and the lower part of the angle adjustment pin (4-2) is respectively provided with a 360° ring groove and a 180° half ring groove from top to bottom, wherein the first lower joint (4) and the second lower joint (7) have the same structure.

11. The computer support arm with a freely adjustable angle according to claim 1, **characterized in that**: the base assembly (6) comprises a base, a foot pad, an L-shaped bracket, a small bracket, a circular pressure plate, a screw, and a base, the bottom of the base (6-1) uses a fourth screw (6-3) to connect the horizontal surface of the L-shaped bracket (6-4), and the vertical surface of the L-shaped bracket (6-4) uses bolts to connect the small bracket (6-5), the small bracket (6-5) has an L-shaped structure, the vertical surface of the small bracket (6-5) is connected with the L-shaped bracket (6-4), and the horizontal surface of the small bracket (6-5) is connected with a screw rod (6-6), the top of the screw rod (6-6) is connected to the circular pressing plate (6-7), the screw rod (6-6) penetrates the small bracket (6-5) and is located at the lower part of the small bracket (6-5); the circular pressing plate (6-7) is located below the horizontal plane of the L-shaped bracket (6-4), the foot pad (6-2) being arranged between the bottom of the base (6-1) and a horizontal plane of the L-shaped bracket (6-4).

12. The computer support arm with a freely adjustable angle according to claim 10 is **characterized by**: the upper part of the base (6-1) is a cylindrical structure, the base (6-1) is provided with a powder sleeve (6-8) at the top of the base (6-1) is arranged on the upper side of the waist groove, waist groove is provided with a second gland (6-11), the middle of the second gland (6-11) is provided with a round hole, round hole is provided with a second knob (6-10), the top of the second knob (6-10) is connected with the second knob sleeve (6-9) through the square boss, the bottom side of the second knob (6-10) is provided with a second knob boss (6-14), the bottom of the second knob (6-10) through the second knob boss (6-14) is connected with the top arc surface of a second latch (6-12), a second small pressure spring (6-13) is arranged at the lower part of the second latch (6-12), there being two second latches (6-12) and second small compression springs (6-13).

13. The computer support arm with a freely adjustable angle according to claim 10, **characterized in that**: the superstructure of the base assembly (6) is consistent with the top structure of the inclined arm (5), the top of the inclined arm (5) being connected with the angle adjustment pin (4-2) of the first joint (4); the top of the base assembly (6) being connected to the angle adjustment pin of the second lower connector (7).

## Patentansprüche

1. Computertragarm mit einem Winkel, der frei eingestellt werden kann, umfassend eine VESA-Plattenanordnung, eine Kugelkopfanordnung und eine Basisanordnung, wobei ein Ende der Kugelkopfanordnung (2) mit der VESA-Plattenanordnung (1) verbunden ist und die Kugelkopfanordnung (2) mit einem Ende eines dynamischen Arms (3) durch ein oberes Gelenk (8) verbunden ist und das andere Ende des dynamischen Arms (3) mit einem Ende eines geneigten Arms (5) durch ein erstes unteres Gelenk (4) verbunden ist und das andere Ende des geneigten Arms (5) mit einer Basisanordnung (6) durch ein zweites unteres Gelenk (7) verbunden ist und die Kugelkopfanordnung (2) einen Befestigungssitz, einen Verbinder, ein Achtergelenk, eine Knaufanordnung umfasst und der mittlere Teil des Befestigungssitzes (2-1) eine zweite Schraube (2-9) und eine Schraubenmutter (2-10) verwendet, um den Boden des Verbindungsstücks (2-2) zu verbinden, und ein oberer Teil des Verbindungsstücks (2-2) eine dritte Schraube (2-14) verwendet und eine Endabdeckung, um mit dem Achtergelenk (2-3) verbunden zu sein, und eine Knaufanordnung (2-8) auf dem Befestigungssitz (2-1) unter dem Verbindungsstück (2-2) angeordnet ist, **dadurch gekennzeichnet, dass** die Knaufanordnung (2-8) eine erste kleine Druckfeder, einen ersten Riegel, eine erste Druckabdeckung, einen ersten Knauf, eine erste Knaufhülse umfasst, der Befestigungssitz (2-1), der sich unter dem Verbindungsstück (2-2) befindet, mit einer taillenförmigen Nut ausgestattet ist und die taillenförmige Nut in einer ersten Stopfbuchse (2-18) eingebettet ist, die Mitte der ersten Stopfbuchse (2-18) mit einem kreisförmigen Loch ausgestattet ist und das kreisförmige Loch mit dem ersten Knauf (2-19) ausgestattet ist und die Oberseite des ersten Kaufs (2-19) mit der ersten Hülse (2-20) durch eine quadratische Nabe verbunden ist, die untere Seite des ersten Knaufs (2-19) mit einer ersten Knaufnabe (2-21) ausgestattet ist und der Boden des ersten Knaufs (2-19) mit der oberen Bogenfläche des ersten Stöpsels (2-17) durch die erste Knaufnabe (2-21) in Kontakt ist und die erste kleine Druckfeder (2-16) am unteren Teil des ersten Stöpsels (2-17) mit einer Hülse versehen ist und die hintere Seite des befestigten Sitzes (2-1) der Kugelkopfanordnung (2) mit einer Nut in Verbindung mit dem Einsatzblock (1-3) VESA-Plattenanordnung (1) ausgestattet ist.

2. Computertragarm mit einem frei einstellbaren Winkel nach Anspruch 1, **dadurch gekennzeichnet, dass**: die VESA-Plattenanordnung (1) eine VESA-Platte, einen Einsatzblock umfasst und ein vorderer Teil des VESA-Platte (1-1) mit einer taillenförmigen Nabe (1-2) verbunden ist, wobei die VESA-Platte (1-1) mit dem Einsatzblock (1-3) durch die taillenförmige Nabe (1-2) verbunden ist und der Einsatzblock (1-3), der verschiedene Schrauben (1-5) aufnimmt, mit der taillenförmigen Nabe (1-2) verbunden ist, wobei die hintere Seite des Einsatzblocks (1-3) mit einer quadratischen Nabe ausgestattet ist und eine taillenförmige Nut (1-4), die sich auf der quadratischen Nabe befindet, zu einer taillenförmigen Nabe (1-2) passt und die taillenförmige Nut (1-4) mit einer Vielzahl von Durchgangsbohrungen ausgestattet ist.

3. Computertragarm mit einem frei einstellbaren Winkel nach Anspruch 1, **dadurch gekennzeichnet, dass**: das Verbindungsstück (2-2) eine U-förmige Struktur aufweist und eine erste Reibungsplatte (2-4) und eine zweite Reibungsplatte (2-5) zwischen dem Boden des Verbindungsstücks (2-2) und dem Sitz (2-1) angeordnet sind; einige elastische Dichtungen zwischen der Schraubenmutter (2-10) und dem Verbindungsstück (2-2) angeordnet sind; die erste Reibungsplatte (2-4) eine kreisförmige, blattähnliche Struktur ist und mit einem taillenförmigen Loch in der Mitte der ersten Reibungsplatte (2-4) ausgestattet ist und zwei Enden des ersten Reibungsblatts (2-4) jeweils mit einer ersten Biegestruktur (2-6) ausgestattet sind; die zweite Reibungsplatte (2-5) eine kreisförmige, blattähnliche Struktur ist und ein rundes Loch sich in der Mitte des zweitem Reibungsblatts (2-5) befindet, die äußere Kante des runden Lochs mit einer Anzahl von gewichtsreduzierenden Löchern ausgestattet ist und zwei Enden des zweiten Reibungsblatts (2-5) jeweils mit einer zweiten Biegestruktur (2-7) ausgestattet sind.

4. Computertragarm mit einem frei einstellbaren Winkel nach Anspruch 1, **dadurch gekennzeichnet, dass**: die obere Innenseite des Verbindungsstücks (2-2) mit einer dritten Reibungsplatte (2-13) ausgestattet ist, die eine linke Endabdeckung (2-11), die auf einer linken Endseite der oberen Außenseite des Verbindungsstücks (2-2) bereitgestellt ist, eine rechte Endabdeckung (2-12), die auf einer rechten Endseite der oberen Außenseite des Verbindungsstücks (2-2) bereitgestellt ist, und eine dritte Schraube (2-14) von links nach rechts verbindet, die elastische Dichtung, die linke Endabdeckung (2-11), das Verbindungsstück (2-2), das Achtergelenk (2-3) jeweils mit der rechten Endabdeckung (2-12) verbunden sind und/oder das rechte und linke Ende der Verbindung zwischen dem Achtergelenk (2-3) und dem Verbindungsstück (2-2) jeweils mit einer Reibungsnabe (2-15) verbunden sind.

5. Computertragarm mit einem frei einstellbaren Winkel nach Anspruch 1, **dadurch gekennzeichnet, dass**: der dynamische Arm (3) eine obere Verbindungsstange, eine untere Verbindungsgange umfasst und eine obere Hülse der unteren Verbindungsstange (3-3) mit einer oberen Verbindungsstange (3-2) ausgestattet ist, ein Ende der oberen Verbindungsstange (3-2) und der unteren Verbindungsstange (3-3) mit dem oberen Gelenk (8) verbunden sind, das andere Ende der oberen Verbindungsstange (3-2) und der unteren Verbindungsstange (3-3) mit dem ersten unteren Gelenk (4) verbunden ist; die obere Verbindungsstange (3-2) mit einer Triebfeder (3-4) ausgestattet ist und das vordere und hintere Ende der Triebfeder (3-4) jeweils mit einem Ende eines Federgelenks (3-5) und eines zweiten Federgelenks (3-6) verbunden sind, das andere Ende des ersten Federgelenks (3-5) mit einem Adapterstück (3-7) durch einen Stift verbunden ist und die obere Seite des Adapterstücks (3-7) mit einem Rückhaltestift (3-12) verbunden ist und beide Enden des Rückhaltestifts (3-12) an ein Rückhaltestück (3-10) geklemmt sind und der Boden des Adapterstücks (3-7) mit der unteren Verbindungsstange mit einem Stift (3-3) verbunden ist; das andere Ende des zweiten Federgelenks (3-6) mit einem Ende eines Anzeigerings (3-8) verbunden ist und das andere Ende des Anzeigerings (3-8) mit einer Stellschraube (3-9) verbunden ist, wobei die Stellschraube (3-9) mit der oberen Verbindungsstange (3-2) durch den Rückhaltestift (3-1) verbunden ist.

6. Computertragarm mit einem frei einstellbaren Winkel nach Anspruch 5, **dadurch gekennzeichnet, dass**: das Adapterstück (3-7) aus zwei L-förmigen Verbindungsstücken zusammengesetzt ist, dem oberen Teil und dem mittleren Teil des Verbindungsstücks, und die unteren Positionen jeweils mit Durchgangsbohrungen ausgestattet sind, die mit Stiften verbunden sind, und/oder ein Ablenkblech (3-10) eine U-förmige Struktur aufweist und der Boden des Ablenkblechs (3-10) Bolzen aufnimmt, um sich mit der oberen Verbindungsstange (3-2) zu verbinden, und ein oberes Ende des vorderen Teils des Ablenkblechs (3-10) mit einem L-förmigen Ablenkblech-Kartenschlitz (3-11) ausgestattet ist und das Ablenkblech (3-10) durch den Ablenkblech-Kartenschlitz (3-11) verläuft, um sich mit dem Ablenkblech-Stift (3-12) zu verbinden, der mit der oberen Seite des Adapterstücks (3-7) verbunden ist.

7. Computertragarm mit einem frei einstellbaren Winkel nach Anspruch 1 - 5, **dadurch gekennzeichnet, dass**: ein Ende des oberen Gelenks (8) mit dem Achtergelenk (2-8) der Kugelkopfanordnung (2) durch ein Verbindungsstück verbunden ist, ein oberer Teil des anderen Endes des oberen Gelenks (8) mit einem Ende der oberen Verbindungsstange (3-2) durch einen Befestigungsstift verbunden ist und ein unterer Teil des anderen Endes des oberen Gelenks (8) mit der unteren Verbindungsstange (3-3) durch einen Befestigungsstift verbunden ist.

8. Computertragarm mit einem frei einstellbaren Winkel nach Anspruch 1 - 5, **dadurch gekennzeichnet, dass**: der dynamische Arm (3) und der geneigte Arm (5) die gleiche Struktur aufweisen.

9. Computertragarm mit einem frei einstellbaren Winkel nach Anspruch 5, **dadurch gekennzeichnet, dass** die linke und rechte Seite der oberen Verbindungsstange (3-2) des dynamischen Arms (3) jeweils in Fenstern (3-13) eingebettet sind.

10. Computertragarm mit einem frei einstellbaren Winkel nach Anspruch 1, **dadurch gekennzeichnet, dass**: das erste untere Gelenk (4) einen Gelenkverbindungskörper und einen Winkeleinstellungsstift umfasst und der Gelenkverbindungskörper (4-1) eine zylindrische Struktur ist und die Oberseite des Gelenkverbindungskörpers (4-1) eine geneigte Fläche mit Durchgangsbohrungen auf der geneigten Fläche ist, der obere Teil einer Seite des Gelenkverbindungskörpers (4-1) einen Befestigungsstift und eine obere Verbindungsstange (3-2) aufnimmt, die Mitte einer Seite des Gelenkverbindungskörpers (4-1) mit dem anderen Ende der unteren Verbindungsstange (3-3) durch einen Befestigungsstift verbunden ist und der Boden des Gelenkverbindungskörpers (4-1) mit dem Winkeleinstellungsstift (4-2) verbunden ist, der obere Teil des Winkeleinstellungsstifts (4-2) eine zylindrische Struktur aufweist und der untere Teil des Winkeleinstellungsstifts (4-2) jeweils mit einer 360º-Ringnut und einer 180º-Halbringnut von oben nach unten ausgestattet ist, wobei das erste untere Gelenk (4) und das zweite untere Gelenk (7) die gleiche Struktur aufweisen.

11. Computertragarm mit einem frei einstellbaren Winkel nach Anspruch 1, **dadurch gekennzeichnet, dass**: die Basisanordnung (6) eine Basis, eine Fußunterlage, eine L-förmige Klammer, eine kleine Klammer, eine kreisförmige Druckplatte, eine Schraube und eine Basis aufweist, der Boden der Basis (6-1) eine vierte Schraube (6-3) verwendet, um die horizontale Fläche der L-förmigen Klammer (6-4) zu verbinden, und die vertikale Fläche der L-förmigen Klammer (6-4) Bolzen verwendet, um die kleine Klammer (6-5) zu verbinden, die kleine Klammer (6-5) eine L-förmige Struktur aufweist, die vertikale Fläche der kleinen Klammer (6-5) mit der L-förmigen Klammer (6-4) verbunden ist und die horizontale Fläche der kleinen Klammer (6-5) mit einer Schraubenstange (6-6) verbunden ist, die obere Seite der Schraubenstange (6-6) mit der kreisförmigen Pressplatte (6-7) verbunden ist, die Schraubenstange (6-6) in die kleine Klammer (6-5) eindringt und sich am unteren Teil der kleinen Klammer (6-5) befindet; die kreisförmige Pressplatte (6-7) sich unter der horizontalen Ebene der L-förmigen Klammer (6-4) befindet, wobei die Fußunterlage (6-2) zwischen dem Boden der Basis (6-1) und einer horizontalen Ebene der L-förmigen Klammer (6-4) angeordnet ist.

12. Computertragarm mit einem frei einstellbaren Winkel nach Anspruch 10, **dadurch gekennzeichnet, dass**: der obere Teil der Basis (6-1) eine zylindrische Struktur ist, die Basis (6-1) mit einer Pulverhülse (6-8) auf der oberen Seite der Basis (6-1) ausgestattet ist, auf der oberen Seite der Taillennut angeordnet ist, die Taillennut mit einer zweiten Stopfbuchse (6-11) ausgestattet ist, die Mitte der zweiten Stopfbuchse (6-11) mit einem runden Loch ausgestattet ist, das runde Loch mit einem zweiten Knauf (6-10) ausgestattet ist, die obere Seite des zweiten Knaufs (6-10) mit der zweiten Knaufhülse (6-9) durch die quadratische Nabe verbunden ist, die untere Seite des zweiten Knaufs (6-10) mit einer zweiten Knaufnabe (6-14) ausgestattet ist, die untere Seite des zweiten Knaufs (6-10) durch die zweite Knaufnabe (6-14) mit der oberen Bogenfläche des zweiten Riegels (6-12) verbunden ist, eine zweite kleine Druckfeder (6-13) am unteren Teil des zweiten Riegels (6-12) angeordnet ist, wobei zwei zweite Riegel (6-12) und zweit kleine Druckfedern (6-13) vorhanden sind.

13. Computertragarm mit einem frei einstellbaren Winkel nach Anspruch 10, **dadurch gekennzeichnet, dass**: die Superstruktur der Basisanordnung (6) zur oberen Struktur des geneigten Arms (5) passt, wobei die obere Seite des geneigten Arms (5) mit dem Winkeleinstellungsstift (4-2) des ersten Gelenks (4) verbunden ist; wobei die obere Seite der Basisanordnung (6) mit dem Winkeleinstellungsstift des zweiten unteren Verbinders (7) verbunden ist.

## Revendications

1. Bras de support d'ordinateur avec un angle qui peut être librement ajusté, comprenant un ensemble de plaque VESA, un ensemble de tête sphérique, et un ensemble de base, dans lequel : une extrémité de l'ensemble de tête sphérique (2) est raccordée à l'ensemble de plaque VESA (1), et l'ensemble de tête sphérique (2) est raccordé à une extrémité d'un bras dynamique (3) par le biais d'une articulation supérieure (8), et l'autre extrémité du bras dynamique (3) est raccordée à une extrémité d'un bras incliné (5) par le biais d'une première articulation inférieure (4), et l'autre extrémité du bras incliné (5) est raccordée à un ensemble de base (6) par le biais d'une seconde articulation inférieure (7), dans lequel l'ensemble de tête sphérique (2) comprend un siège de fixation, un connecteur, une articulation en forme de huit, un ensemble de bouton et la partie centrale du siège de fixation (2-1) utilise une deuxième vis (2-9) et un écrou (2-10) pour raccorder le fond de la pièce de raccordement (2-2), et une partie supérieure de la pièce de raccordement (2-2) utilise une troisième vis (2-14) et un couvercle d'extrémité pour se raccorder à l'articulation en forme de huit (2-3), et un ensemble de bouton (2-8) est agencé sur le siège de fixation (2-1) au-dessous de la pièce de raccordement (2-2), **caractérisé en ce que** :
l'ensemble de bouton (2-8) comprend un premier petit ressort de compression, un premier verrou, un premier couvercle de pression, un premier bouton, un premier manchon de bouton, le siège de fixation (2-1) positionné sous la pièce de raccordement (2-2) est prévu avec une rainure en forme de ceinture, et la rainure en forme de ceinture est enrobée avec un premier joint à labyrinthe (2-18), le centre du premier joint à labyrinthe (2-18) est prévu avec un trou circulaire, et le trou circulaire est prévu avec le premier bouton (2-19) et le sommet du premier bouton (2-19) est raccordé au premier manchon (2-20) par le biais d'un bossage carré, le côté inférieur du premier bouton (2-19) est prévu avec un premier bossage de bouton (2-21) et le fond du premier bouton (2-19) est en contact avec la surface d'arc supérieure du premier connecteur mâle (2-17) par le biais du premier bossage de bouton (2-21), et le premier petit ressort de compression (2-16) est emmanché au niveau de la partie inférieure du premier connecteur mâle (2-17), et l'arrière du siège (2-1) fixé de l'ensemble de tête sphérique (2) est prévu avec une rainure en lien avec l'ensemble de plaque VESA (1) du bloc d'insert (1-3).

2. Bras de support d'ordinateur avec un angle librement ajustable selon la revendication 1, **caractérisé en ce que** : l'ensemble de plaque VESA (1) comprend une plaque VESA, un bloc d'insert et une partie avant de la plaque VESA (1-1) est raccordée avec un bossage en forme de ceinture (1-2), et la plaque VESA (1-1) étant raccordée au bloc d'insert (1-3) par le biais du bossage en forme de ceinture (1-2), et le bloc d'insert (1-3) qui adopte plusieurs vis (1-5) est raccordé avec le bossage en forme de ceinture (1-2), l'arrière du bloc d'insert (1-3) étant prévu avec un bossage carré, et une rainure en forme de ceinture (1-4) positionnée sur le bossage carré correspond à un bossage en forme de ceinture (1-2) et la rainure en forme de ceinture (1-4) est prévue avec une pluralité de trous débouchants.

3. Bras de support d'ordinateur avec un angle librement ajustable selon la revendication 1, **caractérisé en ce que** la pièce de raccordement (2-2) est une structure en forme de U, et une première plaque de friction (2-4) et une deuxième plaque de friction (2-5) sont agencées entre le fond de la pièce de raccordement (2-2) et le siège (2-1) ; certains joints élastiques sont agencés entre l'écrou (2-10) et la pièce de raccordement (2-2) ; la première feuille de friction (2-4) est une structure en forme de feuille circulaire, et est prévue avec un trou en forme de ceinture dans le centre de la première feuille de friction (2-4) et les deux extrémités de la première feuille de friction (2-4) sont respectivement prévues avec une première structure de flexion (2-6) ; la seconde feuille de friction (2-5) est une structure en forme de feuille circulaire, et un trou rond est positionné au centre de la seconde feuille de friction (2-5), le bord externe du trou rond est prévu avec un certain nombre de trous de réduction de poids, et deux extrémités de la seconde feuille de friction (2-5) sont respectivement prévues avec une seconde structure de flexion (2-7).

4. Bras de support d'ordinateur avec un angle librement ajustable selon la revendication 1, **caractérisé en ce que** : le côté interne supérieur de la pièce de raccordement (2-2) est prévu avec une troisième plaque de friction (2-13) qui raccorde un couvercle d'extrémité gauche (2-11) prévu sur une face d'extrémité gauche du côté externe supérieur de la pièce de raccordement (2-2), un couvercle d'extrémité droit (2-12) prévu sur la face d'extrémité droite du côté externe supérieur de la pièce de raccordement (2-2), et une troisième vis (2-14) de gauche à droite, le joint élastique, le couvercle d'extrémité gauche (2-11), la pièce de raccordement (2-2), l'articulation en forme de huit (2-3) sont respectivement raccordés au couvercle d'extrémité droite (2-12) et/ou les extrémités gauche et droite du raccordement entre l'articulation en forme de huit (2-3) et la pièce de raccordement (2-2) sont respectivement raccordées avec le bossage de friction (2-15).

5. Bras de support d'ordinateur avec un angle librement ajustable selon la revendication 1, **caractérisé en ce que** : le bras dynamique (3) comprend une tige de raccordement supérieure, une tige de raccordement inférieure et un manchon supérieur de la tige de raccordement inférieure (3-3) est prévu avec une tige de raccordement supérieure (3-2), une extrémité de la tige de raccordement supérieure (3-2) et la tige de raccordement inférieure (3-3) sont raccordées à l'articulation supérieure (8), l'autre extrémité de la tige de raccordement supérieure (3-2) et la tige de raccordement inférieure (3-3) sont raccordées à la première articulation inférieure (4) ; la tige de raccordement supérieure (3-2) est prévue avec un ressort d'entraînement (3-4) et les extrémités avant et arrière du ressort d'entraînement (3-4) sont respectivement raccordées avec une extrémité d'une articulation à ressort (3-5) et une seconde articulation à ressort (3-6), l'autre extrémité de la première articulation à ressort (3-5) est raccordée à une pièce d'adaptateur (3-7) par une goupille, et la partie supérieure de la pièce d'adaptateur (3-7) est raccordée à une goupille de retenue (3-12) et les deux extrémités de la goupille de retenue (3-12) sont serrées sur une pièce de retenue (3-10) et le fond de la pièce d'adaptateur (3-7) est raccordé à la tige de raccordement inférieure avec une goupille (3-3) ; l'autre extrémité de la seconde articulation à ressort (3-6) est raccordée à une extrémité d'une bague d'indicateur (3-8), et l'autre extrémité de la bague d'indicateur (3-8) est raccordées à une vis d'ajustement (3-9), la vis d'ajustement (3-9) étant raccordée à la tige de raccordement supérieure (3-2) par le biais de la goupille de retenue (3-1).

6. Bras de support d'ordinateur avec un angle librement ajustable selon la revendication 5, **caractérisé en ce que** : la pièce d'adaptateur (3-7) est composée de deux pièces de raccordement en forme de L, la partie supérieure et la partie centrale de la pièce de raccordement, et les positions inférieures sont respectivement prévues avec des trous débouchants raccordés aux goupilles et/ou un déflecteur (3-10) est une structure en forme de U, et le fond du déflecteur (3-10) adopte des boulons pour se raccorder avec la tige de raccordement supérieure (3-2) et une extrémité supérieure de la partie avant du déflecteur (3-10) est prévue avec une fente de carte de déflecteur en forme de L (3-11) et le déflecteur (3-10) passe par la fente de carte de déflecteur (3-11) pour se raccorder avec une goupille de déflecteur (3-12) raccordée à la partie supérieure de la pièce d'adaptateur (3-7).

7. Bras de support d'ordinateur avec un angle librement ajustable selon la revendication 1 ou 5, **caractérisé en ce que** : une extrémité de l'articulation supérieure (8) est raccordée à l'articulation en forme de huit (2-8) de l'ensemble de tête sphérique (2) par le biais d'une pièce de raccordement, une partie supérieure de l'autre extrémité de l'articulation supérieure (8) est raccordée avec une extrémité de la tige de raccordement supérieure (3-2) par une goupille de fixation, et une partie inférieure de l'autre extrémité de l'articulation supérieure (8) est raccordée à la tige de raccordement inférieure (3-3) par une goupille de fixation.

8. Bras de support d'ordinateur avec un angle librement ajustable selon la revendication 1 ou 5, **caractérisé en ce que** : le bras dynamique (3) et le bras incliné (5) ont la même structure.

9. Bras de support d'ordinateur avec un angle librement ajustable selon la revendication 5, **caractérisé en ce que** les côtés gauche et droit de la tige de raccordement supérieure (3-2) du bras dynamique (3) sont respectivement enrobés avec des fenêtres (3-13).

10. Bras de support d'ordinateur avec un angle librement ajustable selon la revendication 1, **caractérisé en ce que** : la première articulation inférieure (4) comprend un corps de raccordement d'articulation et une goupille d'ajustement d'angle, et le corps de raccordement d'articulation (4-1) est une structure cylindrique, et le sommet du corps de raccordement d'articulation (4-1) est une surface inclinée avec des trous débouchants sur la surface inclinée, la partie supérieure d'un côté du corps de raccordement d'articulation (4-1) adopte une goupille de fixation et une tige de raccordement supérieure (3-2), le centre d'un côté du corps de raccordement d'articulation (4-1) est raccordé avec l'autre extrémité de la tige de raccordement inférieure (3-3) par une goupille de fixation, et le fond du corps de raccordement d'articulation (4-1) est raccordé avec la goupille d'ajustement d'angle (4-2), la partie supérieure de la goupille d'ajustement d'angle (4-2) a une structure cylindrique, et la partie inférieure de la goupille d'ajustement d'angle (4-2) est respectivement prévue avec une rainure annulaire de 360° et une demi-rainure annulaire de 180° de haut en bas, dans lequel la première articulation inférieure (4) et la seconde articulation inférieure (7) ont la même structure.

11. Bras de support d'ordinateur avec un angle librement ajustable selon la revendication 1, **caractérisé en ce que** : l'ensemble de base (6) comprend une base, un tampon de pied, une console en forme de L, une petite console, une plaque de pression circulaire, une vis et une base, le fond de la base (6-1) utilise une quatrième vis (6-3) pour raccorder la surface horizontale de la console en forme de L (6-4) et la surface verticale de la console en forme de L (6-4) utilise des boulons pour raccorder la petite console (6-5), la petite console (6-5) a une structure en forme de L, la surface verticale de la petite console (6-5) est raccordée à la console en forme de L (6-4) et la surface horizontale de la petite console (6-5) est raccordée avec une tige de vis (6-6), le sommet de la tige de vis (6-6) est raccordé à la plaque de pression circulaire (6-7), la tige de vis (6-6) pénètre dans la petite console (6-5) et est positionnée au niveau de la partie inférieure de la petite console (6-5) ; la plaque de pression circulaire (6-7) est positionnée au-dessous du plan horizontal de la console en forme de L (6-4), le tampon de pied (6-2) étant agencé entre le fond de la base (6-1) et un plan horizontal de la console en forme de L (6-4).

12. Bras de support d'ordinateur avec un angle librement ajustable selon la revendication 10, **caractérisé par**: la partie supérieure de la base (6-1) est une structure cylindrique, la base (6-1) est prévue avec un manchon à poudre (6-8) au sommet de la base (6-1) qui est agencé du côté de la rainure en forme de ceinture, la rainure en forme de ceinture est prévue avec un second joint à labyrinthe (6-11), le centre du second joint à labyrinthe (6-11) est prévu avec un trou rond, le trou rond est prévu avec un second bouton (6-10), le sommet du second bouton (6-10) est raccordé avec le second manchon de bouton (6-9) par le biais du bossage carré, le côté inférieur du second bouton (6-10) est prévu avec un second bossage de bouton (6-14), le fond du second bouton (6-10) à travers le second bossage de bouton (6-14) est raccordé à la surface d'arc supérieure d'un second verrou (6-12), un second petit ressort de pression (6-13) est agencé au niveau de la partie inférieure du second verrou (6-12), à cet endroit se trouvant deux seconds verrous (6-12) et des seconds petits ressorts de compression (6-13).

13. Bras de support d'ordinateur avec un angle librement ajustable selon la revendication 10, **caractérisé en ce que** : la superstructure de l'ensemble de base (6) est compatible avec la structure supérieure du bras incliné (5), le sommet du bras incliné (5) étant raccordé avec la goupille d'ajustement d'angle (4-2) de la première articulation (4) ; le sommet de l'ensemble de base (6) étant raccordé à la goupille d'ajustement d'angle du second connecteur inférieur (7).
